# EUROPEAN PATENT APPLICATION

(11) **EP 4 641 117 A1**
(43) Date of publication of application: **29.10.2025**
(21) Application number: 25171989.4
(22) Date of filing: 23.04.2025
(51) Int. Cl.: F25B 31/00, F25B 49/02

(54) **CONTROL METHOD AND CONTROL DEVICE FOR COMPRESSOR UNIT**

(30) Priority: 24.04.2024 CN 202410501403
(71) Applicant: Carrier Corporation, Palm Beach Gardens, FL 33418 (US)
(72) Inventor: MAHMOUD, Ahmad M., Palm Beach Gardens, 33418 (US); CLARK, Matthew, Palm Beach Gardens, 33418 (US); WANG, Jinxiang, Shanghai, 201206 (CN); CHAI, Shaowei, Shanghai, 201206 (CN); FENG, Xi, Shanghai, 201206 (CN)
(74) Representative: Dehns

(57) **Abstract**

The invention aims to provide a control method and a control device (200) for a compressor unit (100), in which oil levels of a first compressor (1) and a second compressor (2) can be adjusted without additionally arranging an oil return pipeline. A first aspect of this invention provides a control method for a compressor unit (100), the compressor unit (100) having a first compressor (1) and a second compressor (2), and the first compressor (1) and the second compressor (2) being in communication with each other through a gas balance pipe (3) and an oil balance pipe (4). The compressor unit (100) has a conventional operation step and an oil level adjustment step that are alternately executed, and in the oil level adjustment step, the compressor unit (100) changes a rotation speed of the first compressor (1) and/or the second compressor (2) to adjust oil levels of the first compressor (1) and the second compressor (2).

## Description

### Technical Field

The present invention relates to the technical field of compressors, in particular to a control method and a control device for a compressor unit.

### Background Art

At present, a compressor unit composed of two compressors connected in parallel generally has a problem of difficulty in adjusting oil levels of the compressors, and when the two compressors operate simultaneously for a period of time, oil levels in the two compressors may be unbalanced, or when one of the compressors operates independently for a period of time, the oil level in the compressor may drop, which results in both or one of the compressors being in an oil loss state, thereby affecting normal operation of the compressor unit.

In this regard, Patent CN101017039A has proposed an oil balance device for a dual-compressor air conditioner, in which a gas balance pipe and an oil balance pipe are connected between two parallel compressors, and by connecting an oil separator to a general exhaust pipe side of the compressor, oil level adjustment between the two compressors is realized based on the oil separator and an oil return pipeline composed of a condenser, an evaporator, and a solenoid valve. However, an oil return pipeline device in Patent CN101017039A is complex, and has a high cost for improvement.

### Summary

Embodiments of this invention aim to provide a control method and a control device for a compressor unit to at least solve or alleviate problems existing in the prior art.

A first aspect of this invention provides a control method for a compressor unit, the compressor unit having a first compressor and a second compressor, and the first compressor and the second compressor being in communication with each other through a gas balance pipe and an oil balance pipe. At least one operation mode of the compressor unit has a conventional operation step and an oil level adjustment step that are alternately executed, and in the oil level adjustment step, the compressor unit changes a rotation speed of the first compressor and/or the second compressor and continuously operates for a predetermined period of time to adjust oil levels of the first compressor and the second compressor.

Optionally, the predetermined continuous operation duration (predetermined period of time) in the oil level adjustment step is 0 min to 10 min.

Optionally, a predetermined continuous operation duration in the conventional operation step is 0.5 h to 2 h.

Optionally, the first compressor of the compressor unit is a variable speed compressor, and the second compressor of the compressor unit is a fixed speed compressor.

Optionally, a check valve is further provided at an outlet of the second compressor.

Optionally, when the compressor unit operates under a heating condition and both the first compressor and the second compressor operate in the conventional operation step, in the oil level adjustment step, the rotation speed of the first compressor is controlled to be set between an upper limit rotation speed and a lower limit rotation speed of the first compressor.

Optionally, when the compressor unit operates under a cooling condition and both the first compressor and the second compressor operate in the conventional operation step, in the oil level adjustment step, the rotation speed of the first compressor is controlled to be set equal to the upper limit rotation speed of the first compressor.

Optionally, when the compressor unit operates under a heating condition, the first compressor operates, and the second compressor stops operating in the conventional operation step, in the oil level adjustment step, the rotation speed of the first compressor is adjusted to be between the upper limit rotation speed and the lower limit rotation speed of the first compressor.

Optionally, when the compressor unit operates under a cooling condition, the first compressor operates, and the second compressor stops operating in the conventional operation step, in the oil level adjustment step, the second compressor is turned on and the first compressor is adjusted to have a rotation speed lower than the upper limit rotation speed of the first compressor.

Optionally, when the compressor unit operates under the cooling condition, the first compressor operates, and the second compressor stops operating in the conventional operation step, the rotation speed of the first compressor is reduced before the second compressor is turned on.

A second aspect of this invention provides a control device for a compressor unit, the compressor unit having a first compressor and a second compressor, and the first compressor and the second compressor being in communication with each other through a gas balance pipe and an oil balance pipe. The control device has a conventional operation unit and an oil level adjustment unit that alternately operate, and the oil level adjustment unit generates an instruction for changing a rotation speed of the first compressor and/or the second compressor and allowing the compressor unit to continuously operate for a predetermined period of time to adjust oil levels of the first compressor and the second compressor.

Optionally, the first compressor of the compressor unit is a variable speed compressor, and the second compressor of the compressor unit is a fixed speed compressor.

According to the embodiments of the control method and the control device for a compressor unit, an influence on conventional operation of the compressor unit is extremely low by alternately executing the oil level adjustment step in the conventional operation step. Moreover, the oil levels of the first compressor and the second compressor can be adjusted only by adjusting the rotation speed of the first compressor and/or the second compressor in the oil level adjustment step without additionally arranging the oil return pipeline, so that the device is simple, and improvement on a traditional compressor unit can be conveniently made.

### Descriptions of the Drawings

Certain exemplary embodiments will now be described in greater detail by way of example only and with reference to the accompanying drawings in which:
FIG. 1 is a schematic diagram of a hardware structure of a compressor unit to which a control method and a control device for a compressor unit are applicable;
FIG. 2 is a schematic diagram of another hardware structure of a compressor unit to which another control method and another control device for a compressor unit are applicable;
FIG. 3 is a flowchart of the control method for a compressor unit;
FIG. 4 shows another control method for a compressor unit;
FIG. 5 is a schematic diagram of rotation speed switching of a first compressor and a second compressor in a control method for a compressor unit in a high power output mode;
FIG. 6 is a schematic diagram of the rotation speed switching of a first compressor and a second compressor in a control method for a compressor unit in a low power output mode; and
FIG. 7 is a schematic diagram of a structure of a control device for a compressor unit.

### List of Reference Numerals:

Compressor unit 100; control device 200; first compressor 1; second compressor 2; gas balance pipe 3; oil balance pipe 4; conventional operation unit 5; oil level adjustment unit 6; first solenoid valve (check valve) 7; second solenoid valve 8; and balanced branch 9.

### Detailed Description

Some embodiments of the present invention are described below with reference to the accompanying drawings. Those skilled in the art should understand that these embodiments are merely used to explain the technical principles of the present invention, and are not intended to limit the protection scope of the present invention, which is as set out in the appended claims.

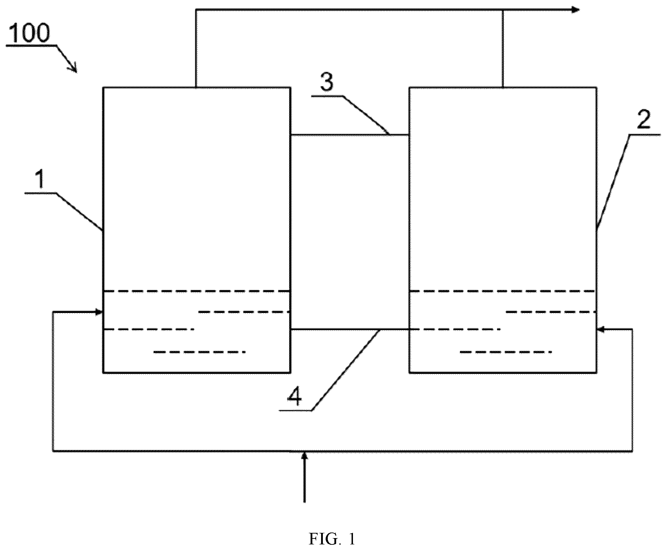

FIG. 1 is a schematic diagram of a hardware structure of a compressor unit to which a control method and a control device for a compressor unit are applicable according to some embodiments of this invention. As shown in FIG. 1, a compressor unit 100 includes a first compressor 1 and a second compressor 2, the first compressor 1 and the second compressor 2 are in communication with each other through a gas balance pipe 3 and an oil balance pipe 4, and in a non-operating state of the compressor unit 100, air pressures inside the first compressor 1 and the second compressor 2 communicate with each other through the gas balance pipe 3 to maintain balance, and lubricating oil levels inside the first compressor 1 and the second compressor 2 communicate with each other through the oil balance pipe 4 to maintain balance. However, in a case where the first compressor 1 and the second compressor 2 operate simultaneously, or in a case where one of the compressors (first compressor 1 or second compressor 2) operates independently, the oil level may be unbalanced due to a pressure difference existing inside the first compressor 1 and the second compressor 2, or, since a lubricating oil in a system pipeline retains after the compressor unit operates for a long period of time, and oil return of the compressors is reduced such that the oil level is lowered, at least one of the compressors is in a low oil level state, which affects normal operation of the compressor unit.

The first compressor 1 and the second compressor 2 may also be two variable speed compressors connected in parallel, or the first compressor 1 and the second compressor 2 may also be one fixed speed compressor and one variable speed compressor connected in parallel. The above all fall within the protection scope of this invention as set out in the appended claims.

Hereinafter, an example in which a compressor unit includes one fixed speed compressor (second compressor 2) and one variable speed compressor (first compressor 1) is used for description. The fixed speed compressor and the variable speed compressor are connected in parallel and used in combination, the fixed speed compressor can control an interval range of output power of the compressor unit 100 by start and stop thereof, and the variable speed compressor can adjust the output power of the compressor unit 100 more finely within the interval range, so that the output power of the compressor unit 100 can be adjusted more quickly and stably.

The compressor unit 100 may be a compressor unit of any refrigerating or heating appliances, which is not limited herein. Examples thereof may include an air conditioner, a refrigerator, a freezer, and the like, and an air conditioner is used as an example herein to describe an operation condition of the compressor unit 100 in a high power output mode and a low power output mode.

### <High Power Output Mode>

When the compressor unit 100 is in the high power output mode, that is, a mode in which both the first compressor 1 and the second compressor 2 operate, specifically, the second compressor 2 operates at a fixed speed at its rated rotation speed and the first compressor 1 operates at a variable speed, the first compressor 1 can operate at a variable speed between an upper limit rotation speed and a lower limit rotation speed thereof according to a change in operation condition requirement.

### <Low Power Output Mode>

When the compressor unit 100 is in the low power output mode, the first compressor 1 operates and the second compressor 2 stops operating. When the compressor unit 100 is used for heating, as described in the high power output mode, the first compressor 1 can operate at a variable speed between the upper limit rotation speed and the lower limit rotation speed thereof according to the change in operation condition requirement, and since the second compressor 2 is in an operation-stopped state in the low power output mode, the first compressor 1 may operate at a lower rotation speed. When the compressor unit 100 is used for cooling, the first compressor 1 also operates by adjustment between corresponding upper limit rotation speed and lower limit rotation speed thereof according to an operation condition requirement, and certainly, may also maintain fixed speed operation according to an operation condition requirement.

In the compressor unit 100 to which the control method and the control device according to some embodiments of this invention are applicable, the high power output mode and the low power output mode can both ensure that total output power of the compressor unit 100 can be adjusted, and an interval range of the total output power of the compressor unit 100 can be quickly adjusted by start and stop of the second compressor 2.

In addition, in the compressor unit shown in FIG. 1 to which some embodiments of this invention are applicable, high pressure ends of the first compressor 1 and the second compressor 2 are connected. In other words, the high pressure ends of the first compressor 1 and the second compressor 2 share a pipeline, although the compressor unit 100 according to some embodiments of this invention is thus illustrated in FIG. 1, even in a case of a compressor unit in which each compressor operates through an independent high pressure end, some embodiments of this invention may be completely applicable as long as respective compressors are in communication with each other at low pressure ends, or oil return pipelines thereof are in communication with each other.

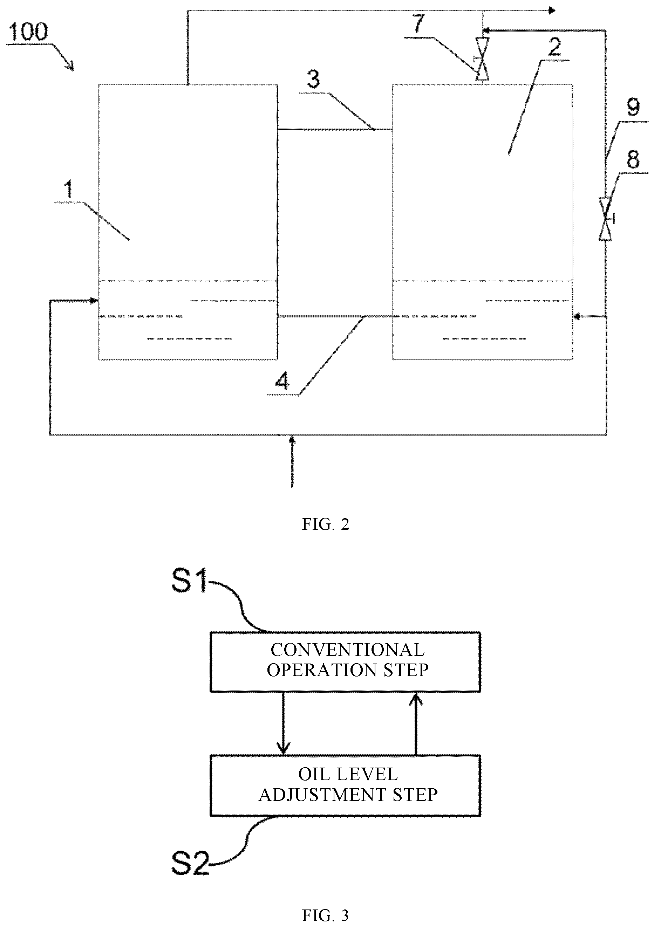

According to a compressor unit to which some other optional embodiments are applicable, as shown in FIG. 2, an exhaust line of the high pressure end of the first compressor 1 and an exhaust pipeline of the high pressure end of the second compressor 2 are communicated, a control valve is arranged on the exhaust pipeline at an exhaust outlet close to the high pressure end of the second compressor 2, and the valve may be any valve body for controlling opening and closing of a pipeline. Here, taking a case where a first solenoid valve 7 (check valve) is arranged on the exhaust pipeline at the exhaust outlet of the high pressure end of the second compressor 2 as an example for description, in the low power output mode, the first solenoid valve 7 may be closed to avoid a refrigerant from entering the second compressor 2 along with an exhaust flow during the operation of the first compressor 1.

Further, suction pipelines of low pressure ends of the first compressor 1 and the second compressor 2 communicate with each other, in particular, the suction pipeline of the second compressor 2 further has a balanced branch 9 communicating with the exhaust pipeline of the second compressor 2, the balanced branch 9 is provided with a second solenoid valve 8, and in the high power output mode, the second solenoid valve 8 can be opened to balance pressures in chambers of the first compressor 1 and the second compressor 2.

Hereinafter, based on the compressor unit 100 described above, the control method and the control device for the compressor unit 100 are further described with reference to specific embodiments. It should be noted that the compressor unit 100 controlled by the control method and the control device for the compressor unit 100 according to some embodiments of this invention only needs two compressors connected in parallel, and is not limited by the above-described fixed speed compressor, variable speed compressor, upper and lower limit parameters of the rotation speed of the compressor. Even when the compressor unit 100 is not set according to the above-described parameters, at least one control method and control device for a compressor unit may also be executed, which all belong to the protection scope of this invention as set out in the appended claims.

### First Embodiment

FIG. 3 is a flowchart of the control method for a compressor unit according to some embodiments of this invention. Referring to FIG. 1 and FIG. 3, the control method for a compressor unit according to some embodiments of this invention is applicable to any of the above-described compressor units 100 having two compressors connected in parallel. **In** the control method for a compressor unit, a conventional operation step S1 and an oil level adjustment step S2 are alternately executed.

Specifically, in the control method for a compressor unit according to some embodiments of this invention, at least one operation mode of the compressor unit 100 is as follows: in the conventional operation step S1 in which the compressor unit 100 operates normally according to an operation condition requirement (cooling/heating, high or low of output power, and the like), after the conventional operation step S1 is executed for a predetermined period of time, the compressor unit 100 switches to the oil level adjustment step S2, and in the oil level adjustment step S2, the compressor unit 100 relatively changes, according to a rotation speed of the first compressor 1 or the second compressor 2 in the conventional operation step S1, the rotation speed of the first compressor 1 or the second compressor 2 and continuously operates for a predetermined period of time to adjust an oil level balance inside the first compressor 1 and the second compressor 2. After the operation in the oil level adjustment step S2 for a predetermined period of time, the compressor unit 100 returns to the conventional operation step S1 of the normal operation according to the operation condition requirement (cooling/heating, high or low of output power, and the like), and this is repeated.

Taking the compressor unit of the air conditioner as an example, referring to FIG. 1 and FIG. 3, optionally, the conventional operation step S1 of the compressor unit 100 optionally includes four operation modes of the compressor unit 100: high output power + heating mode, high output power + cooling mode, low output power + heating mode, and low output power + cooling mode.

It should be noted that the high output power and the low output power are relative concepts, and are not absolute concepts of high and low. Generally, it can be understood that the case where the first compressor 1 and the second compressor 2 are both in an operation state is the case of high output power, and the case where only the first compressor 1 operates and the second compressor 2 stops operating is the case of low output power.

According to some embodiments of this invention, in the conventional operation step S1, when the compressor unit 100 operates in the high output power + heating mode, the second compressor 2 operates at a fixed speed, and the first compressor 1 operates at a variable speed according to an actual operation condition and a load requirement, and in this case, an adjustable speed change range of the first compressor 1 is relatively large; and when the compressor unit 100 operates in the high output power + cooling mode, the second compressor 2 operates at a fixed speed, and the first compressor 1 operates at a variable speed according to an actual operation condition and a load requirement, and in this case, the adjustable speed change range of the first compressor 1 is relatively small (within adjustable speed change range of first compressor 1 in heating mode with high output power).

Both the first compressor 1 and the second compressor 2 in the compressor unit 100 operating in the two high power output modes remain operating, and internal pressures of chambers of the first compressor 1 and the second compressor 2 are different during the operation process, so that oil level imbalance in the first compressor 1 and the second compressor 2 is likely to occur after the compressor unit 100 operates for a period of time.

According to some embodiments of this invention, in the conventional operation step S1, when the compressor unit 100 operates in the low power output + heating mode, the second compressor 2 stops operating, and the first compressor 1 operates at a variable speed according to an actual operation condition and a load requirement, and in this case, the variable speed range of the first compressor 1 may be relatively large; and when the compressor unit 100 operates in the low output power + cooling mode, the second compressor 2 stops operating, and the first compressor 1 maintains operating at a fixed speed. Since the second compressor 2 stops operating and only the first compressor 1 operates independently in the compressor unit 100 operating in both the two low output power modes, the oil level of the first compressor 1 is also lowered due to retention of lubricating oil in the pipeline in the system.

In the oil level adjustment step S2, by changing the rotation speed of the first compressor 1 and/or the second compressor 2 and maintaining the rotation speed for a predetermined period of time, the pressures in the first compressor 1 and the second compressor 2 may tend to be balanced, which facilitates oil return and promotes oil level balance in the first compressor 1 and the second compressor 2. Specifically, the oil level adjustment step S2 promotes flowing back of the lubricating oil retained in the system while the balance of the pressure in the compressor is stable, and also promotes the lubricating oil to flow from a compressor with a higher oil level to a compressor with less lubricating oil through the oil balance pipe 4, thereby realizing oil balance of the first compressor 1 and the second compressor 2. Therefore, the oil balance and oil return operation of the compressor unit 100 can be realized only by interspersing the oil level adjustment step S2 with the conventional operation step S1 of the compressor unit 100 without arranging an oil separator or other oil return equipment, thereby maintaining a stable operation of the compressor unit 100 for a long period of time.

According to the control method for the compressor unit 100 in some embodiments of this invention, the oil level adjustment step S2 and the conventional operation step S1 are alternately executed, that is, the oil level adjustment step S2 is interspersed in the operation of the compressor unit 100 executing the conventional operation step S1.

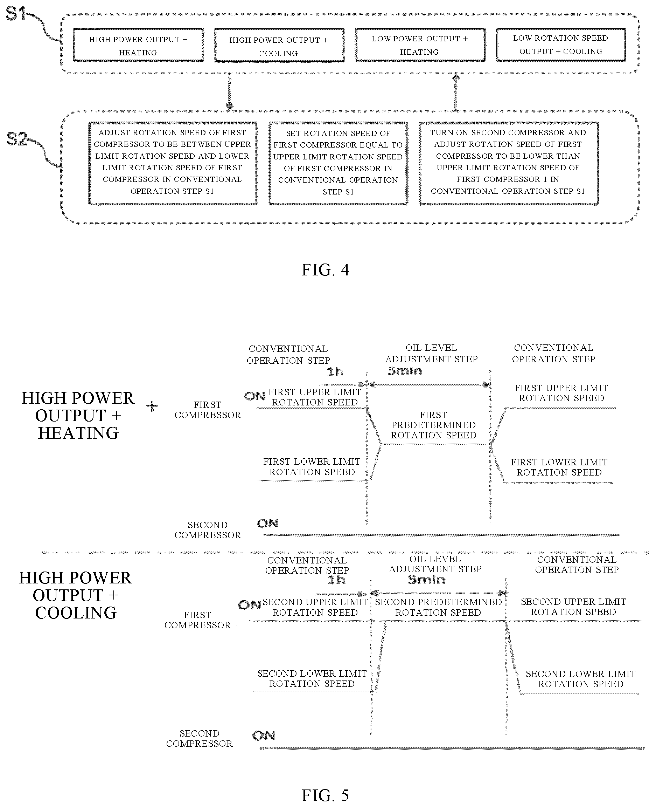

FIG. 4 shows an optional control method for a compressor unit according to some embodiments of this invention. Referring to FIG. 4, in a case where the compressor unit 100 operates in the high output power + heating mode in the conventional operation step S1, that is, both the first compressor 1 and the second compressor 2 operate and generate heat, the first compressor 1 operates at a variable speed, and according to different total load requirements of the compressor unit, the first compressor 1 adjusts the rotation speed between the lower limit rotation speed and the upper limit rotation speed, while the second compressor 2 operates at a fixed speed all the time, so that the oil level in the second compressor 2 and the oil level in the first compressor 1 are likely to be unbalanced. **In** this regard, it is possible to switch to the oil level adjustment step S2 after the conventional operation step S1 is executed for a predetermined period of time, and in the oil level adjustment step S2, the rotation speed of the first compressor 1 is adjusted to a predetermined rotation speed and the first compressor 1 is maintained operating at the rotation speed for a predetermined period of time, the predetermined rotation speed being between the upper limit rotation speed and the lower limit rotation speed under conventional operation of the first compressor 1 in the conventional operation step S1 in the high output power + heating mode. **In** this case, since the first compressor 1 operates at the predetermined rotation speed, the pressures in the chambers of the first compressor 1 and the second compressor 2 are balanced and continuously stable, and in combination with an action of the gas balance pipe 3 and the oil balance pipe 4, balancing of air pressures of lubricating oil chambers in the second compressor 2 and the first compressor 1 is facilitated, and the lubricating oil will flow from a compressor with a higher oil level into a compressor with a lower oil level. After the oil level adjustment step S2 is continuously executed for a predetermined period of time, the process jumps back to the conventional operation step S1, and this alternately cycles in sequence, thereby maintaining the oil balance of the first compressor 1 and the second compressor 2 during the operation of the compressor unit 100.

In a case where the compressor unit 100 operates in the high output power + cooling mode in the conventional operation step S1, that is, both the first compressor 1 and the second compressor 2 operate and execute cooling, the oil level of the first compressor 1 is higher than a normal oil level while the oil level of the second compressor 2 is lower than the normal oil level. In this regard, it is possible to switch to the oil level adjustment step S2 after the conventional operation step S1 is executed for a predetermined time. In the oil level adjustment step S2, the rotation speed of the first compressor 1 is adjusted to be set equal to the upper limit rotation speed under the conventional operation of the first compressor 1 in the high output power + cooling mode in the conventional operation step S1, and maintains stable for a predetermined period of time. By increasing the rotation speed of the first compressor 1 to the upper limit rotation speed, an outlet pressure of the first compressor 1 can be increased to a maximum extent to increase a pressure of the whole system and promote the oil return of the lubricating oil retained in the system pipeline, and since the first compressor 1 and the second compressor 2 both respectively operate at a fixed speed, the air pressures of the chambers in the first compressor 1 and the second compressor 2 are balanced and continuously stable. Therefore, in combination with the gas balance pipe 3 and the oil balance pipe 4, balancing of the air pressures of the respective lubricating oil chambers in the second compressor 2 and the first compressor 1 is facilitated, and the lubricating oil will flow from a compressor with a higher oil level into a compressor with a lower oil level, thereby promoting the oil level balance of the compressor. After the oil level adjustment step S2 is continuously executed for a predetermined period of time, the process jumps back to the conventional operation step S1, and this alternately cycles in sequence, thereby maintaining the oil balance of the first compressor 1 and the second compressor 2 during the operation of the compressor unit 100.

In a case where the compressor unit 100 operates in the low output power + heating mode in the conventional operation step S1, that is, the second compressor 2 stops operating and the first compressor 1 operates and generates heat, the first compressor 1 adjusts the rotation speed between the lower limit rotation speed and the upper limit rotation speed according to an actual operation condition and a load requirement, the lubricating oil in the first compressor 1 is discharged along with a high-temperature and high-pressure refrigerant and partially retained in the system pipeline, the lubricating oil in the second compressor 2 flows to the first compressor 1 correspondingly, but will finally lead to that the oil levels of the first compressor 1 and the second compressor 2 are both reduced, and since the pressure in the chamber is unbalanced during the operation of the first compressor 1 and the second compressor 2, the oil levels of the first compressor 1 and the second compressor 2 are unbalanced. In a case where the oil level of the second compressor 2 is low, when a load of the compressor unit 100 is suddenly adjusted and the second compressor 2 needs to be started emergently, adverse effects may be caused due to an excessively low oil level of the second compressor 2.

In this regard, it is possible to switch to the oil level adjustment step S2 after the conventional operation step S1 is executed for a predetermined period of time, and in the oil level adjustment step S2, the rotation speed of the first compressor 1 is adjusted to a predetermined rotation speed between the upper limit rotation speed and the lower limit rotation speed of the first compressor 1 in the conventional operation step S1 in the low output power + heating mode, and the operation is continued within a predetermined period of time. In the oil level adjustment step S2, since the first compressor 1 maintains a stable rotation speed all the time, a system pressure of the entire compressor unit 100 is stable, which facilitates the oil return of the lubricating oil in the system, promotes the lubricating oil retained in the system pipeline to flow back into the first compressor 1 and the second compressor 2, and meanwhile increases the oil levels in the first compressor 1 and the second compressor 2. After the oil level adjustment step S2 is continuously executed for a predetermined period of time, the process jumps back to the conventional operation step S1, and this alternately cycles in sequence, thereby maintaining the oil return of the first compressor 1 and the second compressor 2 and balance of the respective normal oil levels during the operation of the compressor unit 100.

In a case where the compressor unit 100 operates in the low output power + cooling mode in the conventional operation step S1, that is, the second compressor 2 stops operating and the first compressor 1 operates and executes cooling, the lubricating oil in the first compressor 1 is reduced due to retention in the system pipeline, and the lubricating oil in the second compressor 2 continuously flows to the first compressor 1, but will finally lead to that the oil levels of the first compressor 1 and the second compressor 2 are both reduced and unbalanced. In this regard, it is possible to switch, after the conventional operation step S1 is executed for a predetermined period of time, to the oil level adjustment step S2 after the rotation speed of the first compressor 1 is reduced in preparation for entering the oil level adjustment step S2, and in the oil level adjustment step S2, the second compressor 2 is started, and meanwhile the rotation speed of the first compressor 1 is increased to a predetermined rotation speed and the rotation speed is stabilized all the time during the oil level adjustment step S2.

By properly adjusting the rotation speed of the first compressor 1 and correspondingly starting the second compressor 2, and simultaneously stabilizing the rotation speed of the first compressor 1 all the time in the oil level adjustment step S2, the lubricating oil retained in the system pipeline can be promoted to flow back, and meanwhile, the oil levels of the first compressor 1 and the second compressor 2 are increased. After the oil level adjustment step S2 is continuously executed for a predetermined period of time, the process jumps back to the conventional operation step S1, and this alternately cycles in sequence, thereby maintaining the oil return and the oil level balance of the first compressor 1 and the second compressor 2 during the operation of the compressor unit 100.

It should be noted that when the compressor unit 100 operates in the low output power + cooling mode, if the rotation speed of the first compressor 1 in the conventional operation step S1 is relatively high, optionally, the rotation speed of the first compressor 1 is first reduced before the second compressor 2 is started to reduce a pressure difference between the first compressor 1 and the second compressor 2, thereby avoiding an influence on the start of the second compressor 2 due to a too large outlet pressure difference between the first compressor 1 and the second compressor 2.

In addition, optionally, before the second compressor 2 is started, the prereduced rotation speed of the first compressor 1 is lower than the rotation speed of the first compressor 1 in the oil level adjustment step S2, which further facilitates the start of the second compressor 2. After entering the oil level adjustment step S2, the rotation speed of the first compressor 1 is increased to a predetermined rotation speed.

In order to ensure that the output power of the compressor unit 100 does not fluctuate too much, in some optional embodiments, the predetermined continuous operation duration in the oil level adjustment step S2 may be optionally 0 min to 10 min, and the predetermined continuous operation duration in the conventional operation step S1 may be optionally 0.5 h to 2 h, which optionally satisfies that the predetermined continuous operation duration in the oil level adjustment step S2 is shorter than the predetermined continuous operation duration in the conventional operation step S1.

Control methods according to some embodiments of this invention will be described below with reference to FIG. 5 by taking a cyclic alternating manner as an example in which the conventional operation step S1 is continuously executed for 1 h and then switched to the oil level adjustment step S2, and the oil level adjustment step S2 is continuously executed for 5 min and then switched to the conventional operation step S1. By interspersing the oil level adjustment step S2 of a shorter execution time in the conventional operation step S1 of a long execution time, not only can the oil balance and oil return effect of the oil level adjustment step S2 be ensured, but also the output power of the compressor unit 100 can be maintained stable.

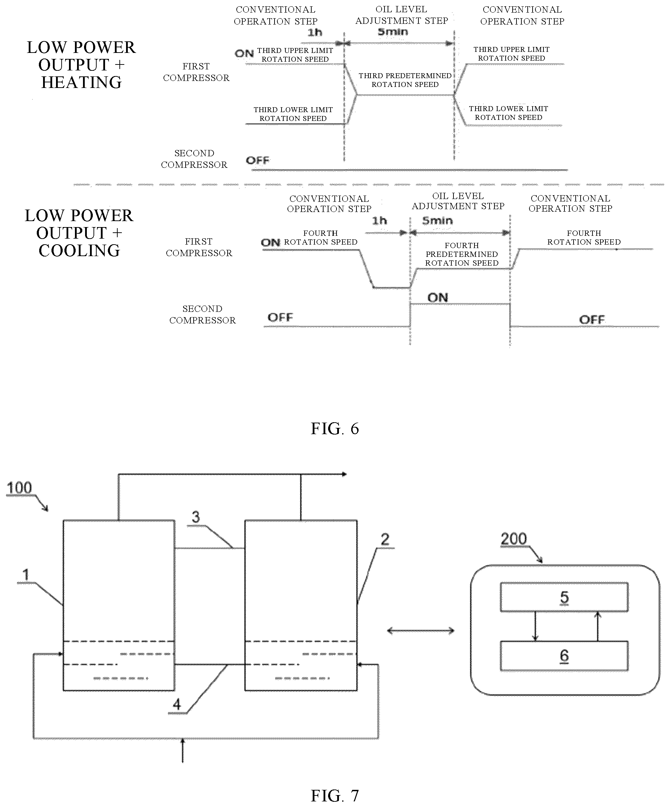

FIG. 5 is a schematic diagram of rotation speed switching of a first compressor and a second compressor in the control method for a compressor unit in a high power output mode according to some embodiments of this invention. FIG. 6 is a schematic diagram of the rotation speed switching of the first compressor and the second compressor in the control method for a compressor unit in a low power output mode according to some embodiments of this invention.

The upper limit rotation speed and the lower limit rotation speed of the first compressor of the compressor unit in the conventional operation step S1 in different operation modes may be determined by factors such as an operation condition requirement and a compressor volume, which is not limited herein, and for ease of description, a naming convention of first, second, third, and fourth is used herein for distinguish, rather than specifically refer to high or low of the rotation speed in different operation modes.

Referring to FIG. 5, optionally, when the compressor unit 100 operates in the high power output + heating mode in the conventional operation step S1, the upper limit rotation speed of the first compressor 1 is a first upper limit rotation speed, the lower limit rotation speed of the first compressor 1 is a first lower limit rotation speed, and the first compressor 1 may operate by adjusting the rotation speed between the first upper limit rotation speed and the first lower limit rotation speed. After the conventional operation step S1 is executed for 1 h, the process is switched from the conventional operation step S1 to the oil level adjustment step S2, and in the oil level adjustment step S2, optionally, the rotation speed of the first compressor 1 is adjusted to a first predetermined rotation speed (first predetermined rotation speed is between first upper limit rotation speed and first lower limit rotation speed of first compressor in conventional operation step S1), and after the operation at a fixed speed is maintained for 5 min, the process jumps back to the conventional operation step S1.

According to a test result of the applicant, after the first compressor 1 continuously operates at the first upper limit rotation speed for 1 h in the conventional operation step S1, an oil level line of the first compressor 1 is significantly lower than an oil level line in the second compressor 2, especially that the oil level of the first compressor 1 is already lower than a normal oil level line of the first compressor 1. In addition, after adjustment by the oil level adjustment step S2 is executed for 5 min, the oil level line in the first compressor 1 returns to be higher than the normal oil level line of the first compressor 1, and the oil level line in the second compressor 2 is lowered.

After the first compressor 1 continuously operates at the first lower limit rotation speed for 1 h, the oil level line in the second compressor 2 is lower than the oil level line in the first compressor 1, especially that the oil level in the second compressor 2 is already lower than a normal oil level line of the second compressor 2, and after the adjustment by the oil level adjustment step S2 is executed, the oil level line in the second compressor 2 returns to be not lower than the normal oil level line of the second compressor 2, and the oil level line in the first compressor 1 is lowered.

When the compressor unit 100 operates in the high power output + cooling mode in the conventional operation step S1, the upper limit rotation speed of the first compressor 1 is a second upper limit rotation speed, the lower limit rotation speed of the first compressor 1 is a second lower limit rotation speed, and the first compressor 1 may operate by adjusting the rotation speed between the second upper limit rotation speed and the second lower limit rotation speed. After the conventional operation step S1 is executed for 1 h, the process is switched from the conventional operation step 1 to the oil level adjustment step S2, and in the oil level adjustment step S2, the rotation speed of the compressor 1 is adjusted to and maintained at a second predetermined rotation speed (second predetermined rotation speed is equal to second upper limit rotation speed of first compressor 1 in conventional operation step S1), and after the oil level adjustment step S2 is executed for 5 min, the process jumps back to the conventional operation step S1.

According to a test result of the applicant, after the first compressor 1 continuously operates at the second upper limit rotation speed for 1 h in the conventional operation step S1, the oil level line in the second compressor 2 is lower than the oil level line in the first compressor 1, and after the adjustment by the oil level adjustment step S2 is executed for 5 min, the oil level line in the first compressor 1 is lowered. After the first compressor 1 continuously operates at the second lower limit rotation speed for 1 h in the conventional operation step S1, the oil level line in the second compressor 2 is lower than the oil level line in the first compressor 1, especially that the oil level in the second compressor 2 is already lower than the normal oil level line of the second compressor 2, and after the adjustment by the oil level adjustment step S2 is executed for 5 min, the oil level line in the second compressor 2 returns to be not lower than the normal oil level line of the second compressor 2, and the oil level line in the first compressor 1 is lowered.

Referring to FIG. 6, when the compressor unit 100 operates in the low power output + heating mode in the conventional operation step S1, the upper limit rotation speed of the first compressor 1 is a third upper limit rotation speed, the lower limit rotation speed of the first compressor 1 is a third lower limit rotation speed, and the first compressor 1 may operate by adjusting the rotation speed between the third upper limit rotation speed and the third lower limit rotation speed, and the second compressor 2 stops operating. After the conventional operation step S1 is executed for 1 h, the process is switched from the conventional operation step S1 to enter the oil level adjustment step S2, and in the oil level adjustment step S2, the rotation speed of the first compressor 1 is adjusted to and maintained at a third predetermined rotation speed (third predetermined rotation speed is between third upper limit rotation speed and third lower limit rotation speed of first compressor 1 in conventional operation step S1), and after the oil level adjustment step S2 is executed for 5 min, the process jumps back to the conventional operation step S1.

According to a test result of the applicant, after the first compressor 1 continuously operates at the third upper limit rotation speed for 1 h in the conventional operation step S1, the oil level line in the first compressor 1 is slightly lower than the oil level line in the second compressor 2, and after the adjustment by the oil level adjustment step S2 is executed for 5 min, the oil level line in the first compressor 1 is increased and the oil level line in the second compressor 2 is increased. After the first compressor 1 continuously operates at the third lower limit rotation speed for 1 h in the conventional operation step S1, the oil level line in the first compressor 1 is slightly higher than the oil level line in the second compressor 2, and after the adjustment by the oil level adjustment step S2 is executed for 5 min, the oil level line in the first compressor 1 is increased and the oil level line in the second compressor 2 is increased.

When the compressor unit 100 operates in the low power output + cooling mode in the conventional operation step S1, in the conventional operation step S1, after the first compressor 1 continuously operates at a fixed speed at a fourth rotation speed for 1 h, the process is switched from the conventional operation step S1 to enter the oil level adjustment step S2. Before entering the oil level adjustment step S2, the rotation speed of the first compressor 1 may be reduced first, and then the process is switched to the oil level adjustment step S2. In the oil level adjustment step S2, the second compressor 2 operates, and the rotation speed of the first compressor 1 is increased and maintained at a fourth predetermined rotation speed (fourth predetermined rotation speed is lower than fourth rotation speed of first compressor 1 in conventional operation step S1), and after the first compressor 1 and the second compressor 2 continuously operate at a fixed speed for 5 min in the oil level adjustment step S2, the process jumps to the conventional operation step S1.

According to a test result of the applicant, after the first compressor 1 continuously operates at the fourth rotation speed for 1 h in the conventional operation step S1, the oil level line of the first compressor 1 and the oil level line of the second compressor 2 are both low, and after the adjustment by the oil level adjustment step S2 is executed for 5 min, the oil level line of the first compressor 1 is increased and the oil level line of the second compressor 2 is increased.

According to the control method for the compressor unit 100 of the embodiment of this invention, only by alternately executing the oil level adjustment step S2 in the conventional operation step S1 of the compressor unit 100, the oil level balance in the first compressor 1 and the second compressor 2 can be realized for the compressor unit 100 in the high power output mode, the oil return of the first compressor 1 and the second compressor 2 can be realized for the compressor unit 100 in the low power output mode to avoid oil loss operation of the first compressor 1 and/or the second compressor 2, an influence on conventional operation of the compressor unit 100 is extremely low, and long-term stable operation of the compressor unit 100 can be maintained.

### Second Embodiment

An optional embodiment of this invention further provides a control device 200 that can execute the above-described control method, in which the control device 200 is communicatively connected to the compressor unit 100, and is configured to generate an instruction to control the operation of the compressor unit 100. The compressor unit 100 includes at least the first compressor 1 and the second compressor 2, and the first compressor 1 and the second compressor 2 are in communication with each other through the gas balance pipe 3 and the oil balance pipe 4. In an optional embodiment, the first compressor 1 of the compressor unit 100 is a variable speed compressor, and the second compressor 2 of the compressor unit 100 is a fixed speed compressor.

FIG. 7 is a schematic diagram of a structure of the control device for a compressor unit according to some embodiments of this invention. As shown in FIG. 7, the control device 200 has a conventional operation unit 5 and an oil level adjustment unit 6 that alternately operate, and the oil level adjustment unit 6 generates an instruction for changing the rotation speed of the first compressor 1 and/or the second compressor 2 and allowing the compressor unit to continuously operate for a predetermined period of time to adjust the oil levels of the first compressor 1 and the second compressor 2. A control logic of the control device 200 is the same as that in the operations executed in the conventional operation step S1 and the oil level adjustment step S2, which will not be described in detail here.

In some optional embodiments, the oil level adjustment unit 6 controls the predetermined continuous operation duration of the compressor unit 100 to be 0 min to 10 min, and the conventional operation unit 5 controls the predetermined continuous operation duration of the compressor unit 100 to be 0.5 h to 2 h. A control process of the control device 200 will be described below by taking a cyclic alternating manner as an example in which the conventional operation unit 5 controls the compressor unit 100 to continuously operate for 1 h, then switches for the oil level adjustment unit 6 to control the compressor unit 100, and the oil level adjustment unit 6 controls the compressor unit 100 to continuously operate for 5 min, then switches for the conventional operation unit 5 to control the compressor unit 100 to operate.

Optionally, the conventional operation unit 5 of the control device 200 optionally includes four operation mode instructions: high power output + heating mode, high power output + cooling mode, low power output + heating mode, and low power output + cooling mode.

When the conventional operation unit 5 operates, the conventional operation unit 5 may generate an operation mode instruction according to an operation condition requirement, for example, the conventional operation unit 5 may generate a high power output + heating mode instruction, a high power output + cooling mode instruction, a low power output + heating mode instruction, or a low power output + cooling mode instruction, the compressor unit 100 operates in a corresponding operation mode according to the received operation mode instruction, and after the conventional operation unit 5 controls the compressor unit 100 to operate for a predetermined period of time, the conventional operation unit 5 stops operating, the oil level adjustment unit 6 operates, and according to a type of the operation mode instruction generated before by the conventional operation unit 5, the oil level adjustment unit 6 generates a corresponding oil level adjustment instruction, the compressor unit 100 correspondingly changes the rotation speeds of the first compressor 1 and the second compressor 2 according to the received oil level adjustment instruction, and after the rotation speeds are maintained for a predetermined period of time, the oil level adjustment unit 6 stops operating, the conventional operation unit 5 operates, and this cycle is repeated alternately. The oil balance and the oil return of the compressor can be realized only by adjusting the rotation speed of the first compressor 1 and/or the second compressor 2 by the oil level adjustment unit without additionally arranging the oil separator.

In addition, in each embodiment of the above-described control method, each step in the control method may be executed by a corresponding unit in the control device 100, or a plurality of steps may be executed by a unit, which will not be described in detail here.

It should be noted that the above merely describes several specific implementations of this invention, and cannot be understood as limiting the protection scope of this invention as set out in the appended claims. Any modifications, equivalent substitutions and improvements made within the principles of this invention shall be included in the protection scope of this invention as set out in the appended claims.

## Claims

1. A control method for a compressor unit (100), the compressor unit having a first compressor (1) and a second compressor (2), and the first compressor and the second compressor being in communication with each other through a gas balance pipe (3) and an oil balance pipe (4), wherein
the compressor unit has a conventional operation step and an oil level adjustment step that are alternately executed, and in the oil level adjustment step, the compressor unit changes a rotation speed of the first compressor and/or the second compressor and continuously operates for a predetermined period of time to adjust oil levels of the first compressor and the second compressor.

2. The control method for a compressor unit (100) according to claim 1, wherein a predetermined continuous operation duration in the oil level adjustment step is 0 min to 10 min.

3. The control method for a compressor unit (100) according to claim 1 or 2, wherein a predetermined continuous operation duration in the conventional operation step is 0.5 h to 2 h.

4. The control method for a compressor unit (100) according to any preceding claim, wherein the first compressor (1) of the compressor unit is a variable speed compressor, and the second compressor (2) of the compressor unit is a fixed speed compressor.

5. The control method for a compressor unit (100) according to any preceding claim, wherein a check valve (7) is further provided at an outlet of the second compressor (2).

6. The control method for a compressor unit (100) according to any preceding claim, wherein
when the compressor unit operates under a heating condition and both the first compressor (1) and the second compressor (2) operate, in the oil level adjustment step, the rotation speed of the first compressor is controlled to be set between an upper limit rotation speed and a lower limit rotation speed of the first compressor, and
when the compressor unit operates under a cooling condition and both the first compressor and the second compressor operate, in the oil level adjustment step, the rotation speed of the first compressor is controlled to be set equal to the upper limit rotation speed of the first compressor.

7. The control method for a compressor unit (100) according to any preceding claim , wherein when the compressor unit operates under a heating condition, the first compressor (1) operates, and the second compressor (2) stops operating, in the oil level adjustment step, the rotation speed of the first compressor is controlled to be set between an upper limit rotation speed and a lower limit rotation speed of the first compressor.

8. The control method for a compressor unit (100) according to any preceding claim , wherein when the compressor unit operates under a cooling condition, the first compressor (1) operates, and the second compressor (2) stops operating, in the oil level adjustment step, the second compressor is started and the first compressor is adjusted to have a rotation speed lower than an upper limit rotation speed of the first compressor.

9. The control method for a compressor unit (100) according to claim 8, wherein when the compressor unit operates under the cooling condition, the first compressor (1) operates, and the second compressor (2) stops operating, the rotation speed of the first compressor is reduced before the second compressor is started.

10. A control device (200) for a compressor unit (100), the compressor unit having a first compressor (1) and a second compressor (2), and the first compressor and the second compressor being in communication with each other through a gas balance pipe (3) and an oil balance pipe (4), wherein the control device includes a conventional operation unit (5) and an oil level adjustment unit (6) that alternately operate, and the oil level adjustment unit is configured to generate an instruction for changing a rotation speed of the first compressor and/or the second compressor and allowing the compressor unit to continuously operate for a predetermined period of time to adjust oil levels of the first compressor and the second compressor.

11. The control device (200) for a compressor unit (100) according to claim 10, wherein the first compressor (1) of the compressor unit is a variable speed compressor, and the second compressor (2) of the compressor unit is a fixed speed compressor.
